# EUROPÄISCHE PATENTANMELDUNG

(11) **EP 4 539 255 A1**
(43) Veröffentlichungstag der Anmeldung: **16.04.2025**
(21) Anmeldenummer: 24200820.9
(22) Anmeldetag: 17.09.2024
(51) Int. Cl.: H01R 4/70, H02G 13/00, B01D 46/00, B01D 46/10, H01R 4/46, H01R 4/66, H01R 4/30

(54) **BLITZSCHUTZSYSTEM MIT EINEM PARTIKELFILTER UND PARTIKELFILTER**

(30) Priorität: 26.09.2023 DE 202023105601 U
(71) Anmelder: DEHN SE, 92318 Neumarkt i.d. OPf. (DE)
(72) Erfinder: LANG, Johanna, 92318 Neumarkt i.d.OPf. (DE); LANG, Tobias, 92318 Neumarkt i.d.OPf. (DE)
(74) Vertreter: Prinz & Partner mbB

(57) **Zusammenfassung**

Die Erfindung betrifft ein Blitzschutzsystem (10) mit einer Blitzschutzleitung (12), an der ein Kontaktbereich (20) vorgesehen ist, in dem die Blitzschutzleitung (12) mit einem Blitzschutzteil (14) elektrisch leitend verbunden ist. Im Kontaktbereich (20) ist mindestens ein Partikelfilter (22) angeordnet, der sich wenigstens teilweise um die Blitzschutzleitung (12) und/oder dem Blitzschutzteil (14) herum erstreckt und diese damit zur Umgebung hin abschirmt. Der Partikelfilter (12) ist aus einem Nadelfilz gebildet.

## Beschreibung

Die Erfindung betrifft ein Blitzschutzsystem mit einer Blitzschutzleitung, an der ein Kontaktbereich vorgesehen ist, in dem die Blitzschutzleitung mit einem Blitzschutzteil elektrisch leitend verbunden ist. Des Weiteren betrifft die Erfindung einen Partikelfilter für ein Blitzschutzsystem und die Verwendung eines Nadelfilzes als Partikelfilter für ein Blitzschutzsystem.

Durch ein Blitzschutzsystem wird der bei einem Blitzeinschlag übertragene Strom auf einem Blitzstrompfad an einem zu schützenden Objekt, zum Beispiel einem Gebäude, auf kürzestem Wege entlanggeführt und abgeleitet. So können Schäden an dem zu schützenden Objekt verringert oder ganz vermieden werden.

Solche Blitzschutzsysteme bestehen üblicherweise aus wenigstens einer Blitzschutzleitung und einem daran angeschlossenen Blitzschutzteil, bspw. eine weitere Blitzschutzleitung oder ein Anschlusselement. Die Blitzschutzleitung liegt beispielsweise an dem Blitzschutzteil an oder erstreckt sich in das Blitzschutzteil hinein, sodass ein Kontakt hergestellt ist. Je nach Ausgestaltung des Blitzschutzteils können zwei Blitzschutzleitungen daher entweder (direkt oder indirekt über ein Anschlusselement) miteinander verbunden werden oder eine Blitzschutzleitung wird über das Blitzschutzteil an dem zu schützenden Objekt befestigt.

Die in dem Blitzschutzsystem eingebauten Blitzschutzleitungen, beispielsweise Fangleitungen oder Erdungsleitungen sind üblicherweise aus Metalldrähten gebildet, bspw. Kupfer- oder Aluminiumdrähte, um den Strom besonders schnell und effizient abzuleiten. Nach außen hin können die Blitzschutzleitungen zusätzlich mit einer Isolierung ummantelt und allseitig isoliert sein, welche jedoch optional ist. Sind die Blitzschutzleitungen isoliert, sind zumindest in einem Kontaktbereich, in dem die Blitzschutzleitung das Blitzschutzteil kontaktiert, die Blitzschutzleitung unisoliert oder abisoliert, sodass eine elektrisch leitfähige Verbindung an der Kontaktstelle zwischen der Blitzschutzleitung und dem Blitzschutzteil ausgebildet werden kann.

Allerdings kommt es nach einem Blitzeinschlag, bei dem sehr hohe Ströme, die durch die Blitzschutzleitung und die Kontaktstelle fließen, häufig zu einer Ansammlung von Partikeln, die durch einen Blitzimpuls von der Kontaktstelle abgetragen und/oder weggeschleudert werden und somit den Bereich um die Kontaktstelle (auch Kontaktbereich genannt) verunreinigen. Dies hat zur Folge, dass bei einer anschließenden Überprüfung der Blitzschutzleitung eine eigentlich funktionsfähige Blitzschutzleitung als defekt gemessen bzw. angesehen werden könnte. Die Blitzschutzleitung verliert somit aufgrund der angesammelten Verunreinigungen im Kontaktbereich die Fähigkeit auf Fehler zuverlässig detektierbar zu sein, was letzten Endes dazu führt, dass die Blitzschutzleitung ausgetauscht wird, obwohl sie noch intakt ist.

Aufgabe der vorliegenden Erfindung ist es daher, ein verbessertes Blitzschutzsystem bereitzustellen, in dem der Bereich um die Kontaktstelle, also der Kontaktbereich, durch einen Blitzeinschlag weniger bis gar nicht verunreinigt wird und somit die Blitzschutzleitung auf Fehler detektierbar bleibt.

Die Aufgabe wird erfindungsgemäß durch ein Blitzschutzsystem mit einer Blitzschutzleitung gelöst, an der ein Kontaktbereich vorgesehen ist, in dem die Blitzschutzleitung mit einem Blitzschutzteil elektrisch leitend verbunden ist. In diesem Kontaktbereich ist mindestens ein Partikelfilter angeordnet, der sich wenigstens teilweise um die Blitzschutzleitung und/oder dem Blitzschutzteil herum erstreckt und diese damit zur Umgebung hin abschirmt. Der Partikelfilter ist aus einem Nadelfilz gebildet.

Der Grundgedanke der Erfindung ist, dass der Partikelfilter die bei einem Blitzschlagereignis entstehenden Partikel aufnimmt und dadurch ein Ablagern der Partikel auf der Blitzschutzleitung und/oder auf dem Blitzschutzteil verhindert. Da sich der Partikelfilter wenigstens teilweise um die Blitzschutzleitung bzw. dem Blitzschutzteil und damit auch um die Kontaktstelle herum erstreckt und diese nach außen zur Umgebung hin abdichtet bzw. abschirmt, bildet sich während und/oder nach einem Blitzeinschlag keine Partikelschicht in dem Kontaktbereich zwischen der Blitzschutzleitung und dem Blitzschutzteil aus, sodass der Kontaktbereich und die Umgebung um die Kontaktstelle durch das Blitzschlagereignis nicht beeinträchtigt wird.

Darüber hinaus kann, je nach Ausgestaltung und Material des Partikelfilters, dieser auch die Entstehung von Partikeln, insbesondere von Metallspritzern und/oder Metalltropfen verhindern.

Hierdurch ist sichergestellt, dass das Blitzschutzsystem auch noch nach einem Blitzeinschlag zuverlässig überprüft werden kann, wobei alle Blitzschutzleitungen auf ihre Funktionsfähigkeit getestet werden können. Somit kann nach einem Blitzeinschlag zuverlässig bestimmt werden, welche Blitzschutzleitungen noch intakt und welche defekt sind und daher ausgetauscht werden müssen.

Unter einer Blitzschutzleitung ist im Folgenden entweder eine Fangleitung oder eine Erdungsleitung bzw. Potentialausgleichsschiene zu verstehen, wobei die Fangleitung als Einschlagspunkt für Blitzschläge dienen und die Erdungsleitungen der Erdung bzw. dem Potentialausgleich dienen.

Der (technische) Nadelfilz eignet sich besonders gut zur Aufnahme der Partikel und/oder verhindert effektiv das Entstehen von Metallspritzern oder Metalltropfen.

Unter einem Nadelfilz ist im Folgenden insbesondere ein dichtes Material aus einzelnen Fasern zu verstehen, die mechanisch durch Nadeln über trockene Vernadelung verfilzt, also verfestigt wurden und sich kaum mehr trennen lassen. Die Fasern des Nadelfilzes können grundsätzlich aus jedem Material bestehen, das prinzipiell dazu geeignet ist, in einem Blitzschutzsystem eingebaut zu werden. Der Nadelfilz kann unbeschichtet oder beschichtet als Partikelfilter eingesetzt werden. Auch gesintertes Material oder andere Gewebe können als Partikelfilter eingesetzt werden. Voraussetzung ist nur, dass sie grundsätzlich in einem Blitzschutzsystem eingesetzt werden können.

Wichtig ist, dass die Fasern des Nadelfilzes temperaturbeständig sind, sodass sie den bei einem Blitzeinschlag auftretenden Temperaturen für die Dauer widerstehen können.

Erfindungsgemäß kann das Blitzschutzteil eine weitere Blitzschutzleitung oder ein Anschlusselement sein, mit dem die Blitzschutzleitung elektrisch leitend verbunden ist. Der Nadelfilz kann also entweder im Kontaktbereich zweier Blitzschutzleitungen oder im Kontaktbereich einer Blitzschutzleitung und eines Anschlusselements angeordnet sein. Das Anschlusselement kann unter anderem zum endseitigen Abschließen der Blitzschutzleitung vorgesehen sein. Insbesondere kann es sich bei einer Klemme bzw. einem Verbindungselement um ein Anschlusselement handeln.

Unter einem Kontaktbereich ist grundsätzlich der Bereich um eine Kontaktstelle bzw. einen Kontaktpunkt zu verstehen, wo sich die Blitzschutzleitung und das Blitzschutzteil kontaktieren. Im Kontaktbereich kann die Blitzschutzleitung daher keine Isolierung an zu kontaktierenden Stelle aufweisen. Die Blitzschutzleitung und das Blitzschutzteil kontaktieren sich direkt zumindest in dem Kontaktpunkt und sind dort elektrisch leitend miteinander verbunden. Der Partikelfilter ist somit in direkter Nähe zur Kontaktstelle angeordnet, jedoch nicht genau in der Kontaktstelle, um die elektrisch leitende Verbindung zwischen Blitzschutzleitung und Blitzschutzteil nicht zu unterbrechen bzw. zu beeinträchtigen. Der Partikelfilter hat um die Kontaktstelle herum im Kontaktbereich eine Schutzfunktion für die Blitzschutzleitung und das Blitzschutzteil.

Das Blitzschutzteil kann, insbesondere wenn es als Anschlusselement ausgebildet ist, entweder ein Anschlusskopf, ein Befestigungsring, ein Befestigungsbolzen, ein Verbindungselement oder ein Fangleitungshalter sein. Auch ein als Anschlussklemme oder Stoßverbinder ausgebildetes Anschlusselement ist möglich. Über die Anschlusselemente kann die Blitzschutzleitung an weiteren Blitzschutzleitungen oder einem Gebäude angebracht werden.

Gemäß einem Aspekt der Erfindung kann der Partikelfilter zwischen der Blitzschutzleitung und dem Blitzschutzteil angeordnet sein. Dabei bleibt allerdings wenigstens die Kontaktstelle zwischen der Blitzschutzleitung und dem Blitzschutzteil frei und wird nicht von dem Partikelfilter bedeckt, sodass eine elektrisch leitfähige Verbindung zwischen der Blitzschutzleitung und dem Blitzschutzteil bestehen bleibt. Um die Kontaktstelle herum kann der Partikelfilter grundsätzlich überall angeordnet sein.

In Abhängigkeit davon, als was das Blitzschutzteil ausgeführt ist, kann der Partikelfilter also zwischen zwei Blitzschutzleitungen angeordnet sein.

Beispielsweise kann eine Sandwichstruktur vorgesehen sein, bei dem zwei Leiter, insbesondere zwei Flachleiter, zwischen zwei Klemmplatten angeordnet sind, wobei ein Partikelfilter im Kontaktbereich der beiden Leiter und/oder im Kontaktbereich zwischen einem Leiter und einer zugeordneten Klemmplatte vorgesehen ist. Mit anderen Worten können mehrere Partikelfilter vorgesehen, die sämtlichen Kontaktstellen zugeordnet sind, also Kontaktstellen zwischen Leitern und Kontaktstellen zwischen einem Leiter und einem Kontaktteil des Leiters, bspw. einer Klemmplatte.

Der Partikelfilter kann auch zwischen dem Blitzschutzteil und der Blitzschutzleitung im Bereich einer Öffnung des Blitzschutzteils angeordnet sein. Dies ist vor allem dann der Fall, wenn es sich bei dem Blitzschutzteil um ein Anschlusselement handelt, das zumindest an einer Seite eine Öffnung aufweist, in die die Blitzschutzleitung zumindest teilweise eingeführt werden kann. Der Partikelfilter dient in einer solchen Ausgestaltung dazu, die Öffnung nach außen zur Umgebung hin zumindest teilweise abzuschirmen und den Kontaktbereich, der im Inneren des Anschlusselements liegt, abzudichten, sodass sich kaum bis vorzugsweise gar keine Partikel in dem Kontaktbereich ablagern, insbesondere nicht im Inneren der Öffnung des Anschlusselements, im Bereich möglicher Bohrungen für Schrauben oder auf der Blitzschutzleitung selbst. Die Öffnung kann auch, im Falle eines zweiteiligen Fangleitungshalters ein Schlitz zwischen den beiden Teilen des Fangleitungshalters sein. In einem solchen Fall ist der Partikelfilter im Bereich des Schlitzes des Anschlusselements angeordnet.

Erfindungsgemäß kann der Partikelfilter zumindest (im Querschnitt) teilringförmig auf der Blitzschutzleitung angeordnet sein bzw. zwischen zwei Blitzschutzleitungen, sodass er direkt (und flächig) an der Blitzschutzleitung anliegt, die im Querschnitt rund ist. Dadurch ist der Partikelfilter zumindest teilweise um die Kontaktstelle angeordnet. Dies ist vor allem vorteilhaft, wenn die Blitzschutzleitung in einem Anschlusselement zumindest teilweise aufgenommen ist. Durch die im Querschnitt teilringförmige Form des Partikelfilters wird gewährleistet, dass dieser die Blitzschutzleitung direkt und mit einer möglichst großen Fläche kontaktiert und kein Abstand zwischen Blitzschutzleitung und Partikelfilter vorhanden ist. Diese Anordnung verbessert die Wirksamkeit des Partikelfilters. Es kann insbesondere vorgesehen sein, dass der Partikelfilter die Fangleitung (teilweise) umschließt bzw. umgreift.

Gemäß einem weiteren Aspekt der Erfindung kann der Partikelfilter als ein Ring ausgebildet sein, der auf der Blitzschutzleitung angeordnet ist. Durch die Ausgestaltung als Ring lässt sich der Partikelfilter auf die Blitzschutzleitung schieben, sodass der Partikelfilter im zusammengebauten Zustand auf die Blitzschutzleitung aufgeschoben ist. Der ringförmige Partikelfilter eignet sich daher besonders für den Einsatz in einem Kontaktbereich zwischen einer Blitzschutzleitung und einem Anschlusselement, das eine Öffnung hat, in der die Blitzschutzleitung zur Verbindung teilweise aufgenommen ist. Die Blitzschutzleitung wird dann durch den ringförmigen Partikelfilter besonders effektiv zur Öffnung hin abgeschirmt. Die Geometrie des Partikelfilters kann auf die Geometrie der Kontaktstelle angepasst werden, sodass auch ein Partikelfilter mit beispielsweise einer eckigen Außenkontur und einer eckigen Öffnung möglich ist.

Unabhängig von der Ausgestaltung des Partikelfilters kann das Blitzschutzteil die Blitzschutzleitung zumindest teilweise umschließen und kontaktieren. Ist das Blitzschutzteil als Anschlusselement ausgebildet, kann das Blitzschutzteil die Blitzschutzleitung vollständig umschließen und die Blitzschutzleitung zumindest in einer Kontaktstelle im Kontaktbereich kontaktieren. Ist das Blitzschutzteil als eine weitere Blitzschutzleitung ausgebildet, so kann es die Blitzschutzleitung nur teilweise kontaktieren und umschließen.

Das Blitzschutzteil kann, insbesondere sofern es als Anschlusselement ausgebildet ist, eine Innenwand aufweisen, die zumindest einen Vorsprung hat, an dem eine Kontaktstelle zur Blitzschutzleitung ausgebildet ist. Der Vorsprung weist darüber hinaus eine Anlagefläche für den Partikelfilter auf, die an der Kontaktstelle angrenzt, beispielsweise seitlich. Die Anlagefläche des Blitzschutzteils erfüllt somit die Funktion eines Anschlags für den Partikelfilter, wodurch ein ungewolltes Verrutschen des Partikelfilters auf der Blitzschutzleitung verhindert ist.

Alternativ zu dem Vorsprung mit der Anlagefläche kann das Blitzschutzteil, insbesondere wenn es als Anschlusselement ausgebildet ist, auch eine Innenwand mit zumindest einer Aufnahme haben, in der der Partikelfilter aufgenommen ist. Die Aufnahme erfüllt dabei denselben Zweck wie die Anlagefläche des Vorsprungs, da ein Verschieben oder Verrutschen des Partikelfilters in Bezug auf Anschlusselement verhindert ist. Es ist so beispielsweise sichergestellt, dass die Blitzschutzleitung in eine Öffnung des Blitzschutzteils eingebracht werden kann, ohne den Partikelfilter zu verschieben. Dies gewährleistet die ordnungsgemäße Funktionsweise des Blitzschutzsystems, insbesondere des Partikelfilters, da dieser an der definierten Position verbleibt.

Erfindungsgemäß kann der Partikelfilter den Kontaktbereich zwischen der Blitzschutzleitung und dem Blitzschutzteil vollständig umschließen. Genau genommen kann der Partikelfilter die Kontaktstelle zwischen Blitzschutzleitung und dem Blitzschutzteil vollständig umschließen, sodass der Kontaktbereich vollständig zur Umgebung hin abgeschirmt ist. Wie bereits erläutert hat dies den Vorteil, dass sich keine Partikel im Kontaktbereich und/oder in der Umgebung ablagern. Somit sind sowohl die Blitzschutzleitung als auch das Blitzschutzteil außerhalb des Kontaktbereichs vor Ablagerungen geschützt bzw. die Menge an Ablagerungen in diesem Bereich hat sich deutlich verringert.

Der erfindungsgemäße Partikelfilter kann nur gering hygroskopisch, also wasser- und feuchtigkeitsanziehend ausgebildet sein. Insbesondere ist er gar nicht hygroskopisch, sodass der Partikelfilter kein Wasser aufnimmt. Dies ist besonders wichtig, da das Blitzschutzsystem im Außenbereich an einem Gebäude angebracht werden kann und somit unterschiedlichen Witterungsbedingungen ausgesetzt ist. Ein hygroskopischer Partikelfilter würde sich beispielsweise bei hoher Luftfeuchtigkeit, die bei einem Gewitter typischerweise gegeben ist, mit Feuchtigkeit bzw. Wasser vollsaugen, was bei einem Blitzschlagereignis die Eigenschaften negativ beeinflussen würde.

Der im Blitzschutzsystem eingesetzte Partikelfilter kann hitzebeständig und/oder nicht brennbar sein, sodass er bei einem Blitzschlagereignis kein Feuer fängt und dadurch das Blitzschutzsystem oder gar das zu schützende Objekt nicht beschädigt.

Gemäß einem weiteren Aspekt der Erfindung kann der Partikelfilter leitfähig ausgebildet sein, sodass er zumindest geringfügig Strom zwischen der Blitzschutzleitung und dem Blitzschutzteil leiten kann. Insbesondere ist der Partikelfilter jedoch nur schwach leitfähig, also leitfähiger als eine, die Blitzschutzleitung umhüllende Isolierung und weniger leitfähig als die Blitzschutzleitung und/oder das Blitzschutzteil. Dadurch kann der Partikelfilter als zusätzliche Isolationsschicht in dem Kontaktbereich eingesetzt werden.

Der Partikelfilter kann offenporig ausgebildet sein und/oder zumindest teilweise komprimierbar sein. Durch die offenporige Struktur ergibt sich eine gewisse Flexibilität in der Struktur des Partikelfilters, die den Vorteil bietet, dass sich der Partikelfilter optimal an die Blitzschutzleitung und das Blitzschutzteil anpassen kann. Ferner ist der Partikelfilter so gasdurchlässig, sodass sich keine Gase stauen. Darüber hinaus können in den Poren die Partikel, die in Folge eines Blitzschlagereignisses entstehen, effizienter aufgenommen werden, da die wirksame Oberfläche des offenporigen Partikelfilters aufgrund seiner Poren vergrößert ist. Dadurch können Partikel komplett aufgehalten bzw. in ihrer Ausbreitung gebremst werden. Ein komprimierbarer Partikelfilter hat darüber hinaus den Vorteil, dass er zwischen die Blitzschutzleitung und dem Blitzschutzteil geklemmt werden kann, sodass beispielsweise die Öffnung eines Anschlusselements besser abgedichtet wird.

Aufgrund seiner Eigenschaften ist der Partikelfilter nach einem Blitzeinschlag weiter funktionstüchtig. Insbesondere hält der Partikelfilter mindestens drei Blitzschlagereignissen mit einem Strom von jeweils 150 kA stand. Dadurch ist es nicht notwendig, den Partikelfilter des Blitzschutzsystems nach jedem Blitzschlag auszutauschen, was den Arbeitsaufwand und Wartungszeit minimiert.

Da die Funktionsweise des Partikelfilters auch bei wiederholtem Blitzeinschlag nicht beeinträchtigt ist und dieser Ablagerungen zuverlässig verhindert, kann das Blitzschutzsystem auch nach Blitzeinschlägen in gewohnter Weise elektrisch überprüft werden.

Der technische Nadelfilz, aus dem der Partikelfilter gebildet ist, kann entweder vollständig aus Natur- und/oder Kunststofffasern oder aus metallischen Fasern bestehen oder er kann eine Mischung aus Natur- und/oder Kunststofffasern und metallischen Fasern aufweisen. Insbesondere besteht der Partikelfilter vollständig aus Naturfasern wie Wolle.

Der Partikelfilter kann als dreidimensionaler Filter wirken und verschiedenste Partikel abhalten oder bremsen, wobei die Partikel ausgewählt sind aus der Gruppe bestehend aus Schmauch, Ruß, Metallspritzer von der Kontaktstelle, die sich im Inneren des Blitzschutzteils nach einem Blitzschlagereignis anlagern, Metalltropfen oder weiteren Partikeln, die bei einem Blitzeinschlag zwischen der Blitzschutzleitung und dem Blitzschutzteil entstehen, sowie Kombinationen davon.

Erfindungsgemäß ist auch ein Partikelfilter für ein Blitzschutzsystem vorgesehen, der aus einem Nadelfilz gebildet ist und somit die bereits genannten technischen Vorteile für das Blitzschutzsystem bietet.

Ebenfalls ist erfindungsgemäß die Verwendung eines Nadelfilzes als Partikelfilter für ein Blitzschutzsystem vorgesehen, wodurch sich ebenfalls die obenstehenden Vorteile durch den Nadelfilz als Partikelfilter für das Blitzschutzsystem ergeben.

Weitere Vorteile und Merkmale der Erfindung ergeben sich aus der nachfolgenden Beschreibung sowie aus den beigefügten Zeichnungen, auf die Bezug genommen wird. In den Zeichnungen zeigen:
- Figur 1 ein erfindungsgemäßes Blitzschutzsystem gemäß einer ersten Ausführungsform, mit einer Blitzschutzleitung als Fangleitung und einem Blitzschutzteil, das als weitere Blitzschutzleitung als Fangleitung ausgebildet ist;
- Figur 2 eine Draufsicht des Blitzschutzsystems aus Figur 1;
- Figur 3 einen Querschnitt entlang der Achse A des Blitzschutzsystems aus den Figuren 1 und 2;
- Figur 4 einen Querschnitt eines erfindungsgemäßen Blitzschutzsystems gemäß einer zweiten Ausführungsform, mit einer Blitzschutzleitung als flache Fangleitung und einem Blitzschutzteil, das als eine weitere Blitzschutzleitung in Form eines Flachleiters ausgebildet ist;
- Figur 5 einen Querschnitt eines erfindungsgemäßen Blitzschutzsystems gemäß einer dritten Ausführungsform, mit einer Blitzschutzleitung als Fangleitung und einem Blitzschutzteil, das als Anschlusselement in Form einer. Verbindungsklemme ausgebildet ist;
- Figur 6 ein erfindungsgemäßes Blitzschutzsystem gemäß einer vierten Ausführungsform, mit einer Blitzschutzleitung als Fangleitung und einem Blitzschutzteil, das als Anschlusselement als Stoßverbinder ausgebildet ist;
- Figur 7 eine Draufsicht des erfindungsgemäßen Blitzschutzsystems aus Figur 6;
- Figur 8 einen Querschnitt entlang der Achse A des erfindungsgemäßen Blitzschutzes aus den Figuren 6 und 7;
- Figur 9 ein erfindungsgemäßes Blitzschutzsystem gemäß einer fünften Ausführungsform, mit einer Blitzschutzleitung als Fangleitung und einem Blitzschutzteil, das als Anschlusselement in Form einer Anschlussklemme ausgebildet ist;
- Figur 10 einen teilprojektierten Querschnitt des Blitzschutzsystems aus Figur 9;
- Figur 11 einen Querschnitt entlang der Achse B des Blitzschutzsystems aus den Figuren 9 und 10;
- Figur 12 ein erfindungsgemäßes Blitzschutzsystem gemäß einer sechsten Ausführungsform, mit einer Blitzschutzleitung als Fangleitung und einem Blitzschutzteil, das als Anschlusselement ausgebildet ist.

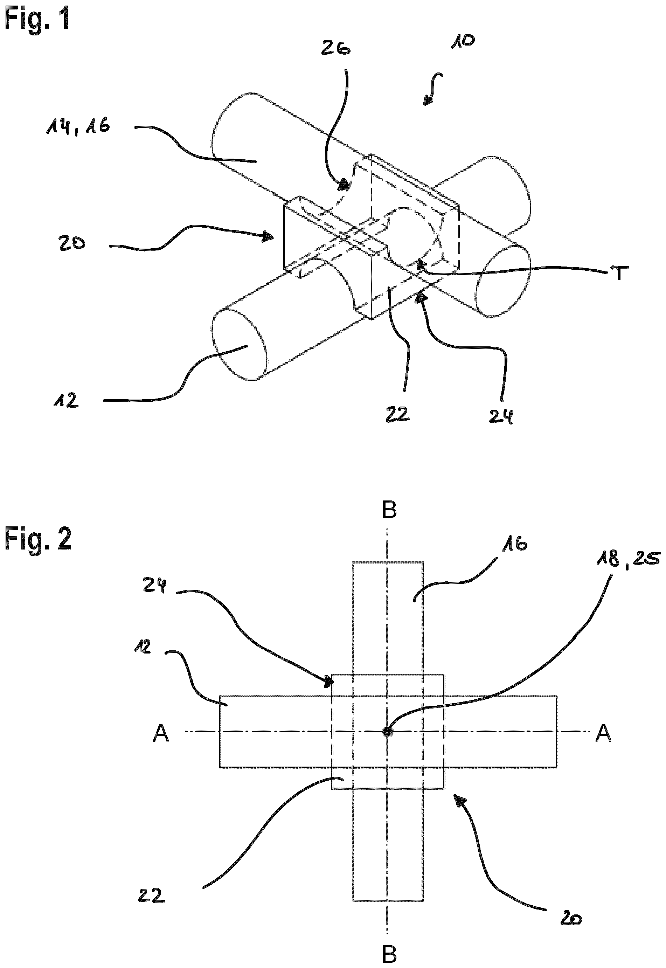

Die Figuren 1 bis 3 zeigen eine erste Ausführungsform eines erfindungsgemäßen Blitzschutzsystems 10 mit einer, im Querschnitt kreisförmigen (ersten) Blitzschutzleitung, die vorliegend als Fangleitung ausgebildet ist und einem Blitzschutzteil 14, das als eine weitere, zweite Blitzschutzleitung 16, die vorliegend ebenfalls eine Fangleitung ist, ausgebildet ist, die orthogonal zur ersten Blitzschutzleitung 12 verläuft.

Die Blitzschutzleitungen 12, 16 sind in den folgenden Figuren als Fangleitungen dargestellt. Diese können jedoch auch als Erdungsleitungen bzw. Potenzialausgleichsschienen ausgebildet sein. Auch eine Kombination aus einer Fangleitung und einer Erdungsleitung ist denkbar.

Die Blitzschutzleitungen 12, 16 sind aus einem metallischen Material, beispielsweise Kupferdrähten oder -leitern, gebildet und kontaktieren sich mindestens in einem Kontaktpunkt 18, über den die beiden Blitzschutzleitungen 12, 16 elektrisch leitend miteinander verbunden sind. Bei dem Kontaktpunkt 18 kann es sich auch um eine Kontaktfläche handeln, also allgemein eine Kontaktstelle.

Um den Kontaktpunkt 18 herum erstreckt sich ein Kontaktbereich 20, der sich in unmittelbarer Nähe zu dem Kontaktpunkt 18 befindet.

In dem Kontaktbereich 20 der beiden Blitzschutzleitungen 12, 16 ist ein Partikelfilter 22 angeordnet, der sich wenigstens teilweise um zumindest eine der Blitzschutzleitungen 12, 16 herum erstreckt und zwischen den beiden Blitzschutzleitungen 12, 16 angeordnet ist. Der in der Figur 1 dargestellte Partikelfilter 22 erstreckt sich um den halben Außenumfang beider Blitzschutzleitungen 12, 16 und schirmt somit die Blitzschutzleitungen 12, 16 nach außen hin zur Umgebung ab.

Der Partikelfilter 22 weist, in einer Draufsicht, wie sie in Figur 2 dargestellt ist, eine rechteckige Außenkontur 24 auf, deren Seitenwände jeweils im Wesentlichen senkrecht auf zwei Mittelachsen A, B der Blitzschutzleitungen 12, 16 stehen. Im Kontaktbereich 20 steht die Außenkontur 24 des Partikelfilters 22 allseitig über die Blitzschutzleitungen 12, 16 über, sodass eine vollständige Abdichtung des Kontaktpunktes 18 erzielt wird.

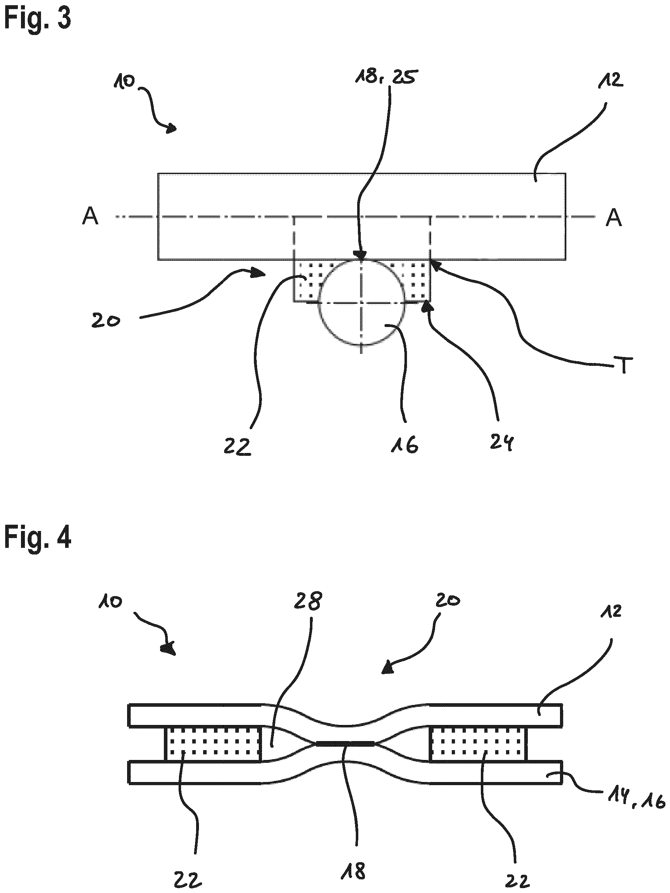

Wie in Figur 3 gezeigt ist, weist der Partikelfilter 22 auch im Querschnitt eine rechteckige Form auf, ist also im Wesentlichen quaderförmig, und hat zwei orthogonal zueinanderstehende halbkreisförmige Nuten 26 beziehungsweise Einkerbungen, in denen die beiden Blitzschutzleitungen 12, 16 liegen.

Die beiden Nuten 26 weisen im Querschnitt jeweils einen Tiefpunkt T auf. Die Nuten 26 sind dabei jeweils so tief ausgebildet, dass der Partikelfilter 22 an einem Bereich, in dem sich die Tiefpunkte T der Nuten 26 kreuzen und den Kontaktpunkt 18 der beiden Blitzschutzleitungen 12, 16 bilden, ein Loch 25 aufweist, sodass ein direkter Kontakt der beiden Blitzschutzleitungen 12, 16 im Kontaktpunkt 18 möglich ist.

Der Partikelfilter 22 wirkt als ein dreidimensionaler Filter, der Partikel (nicht gezeigt), die bei einem Blitzeinschlag in Folge des großen fließenden Stroms zwischen dem Blitzschutzteil 14 und der Blitzschutzleitung 12 entstehen, abhält, zurückhält, aufnimmt und/oder deren Entstehung gänzlich verhindert.

Solche Partikel sind beispielsweise Ruß, Schmauch, Metallspritzer und/oder Tropfen, die von der Blitzschutzleitung 12 und/oder dem Blitzschutzteil 14 während eines Blitzeinschlags abgeschieden werden. Darüber hinaus kann es bei einem Blitzeinschlag, abhängig von dem Material der Blitzschutzleitung 12 und des Blitzschutzteils 14, zur Abscheidung von weiteren Partikeln kommen.

Die Partikel lagern sich während und/oder nach dem Blitzeinschlag an der Blitzschutzleitung 12 und/oder dem Blitzschutzteil 14 an und führen dazu, dass der Kontaktbereich 20 verunreinigt wird.

Um eine Ablagerung zu verhindern, weist das erfindungsgemäße Blitzschutzsystem den Partikelfilter 22 auf, der aus Nadelfilz gebildet ist. Der Nadelfilz ist entweder vollständig aus natürlichen Fasern wie Wolle und/oder aus synthetischen Fasern wie Kunststofffasern beziehungsweise aus metallischen Fasern gebildet, oder enthält eine Mischung aus beiden Fasern, die durch einen mechanischen Vernadelungsprozess miteinander verbunden werden, wodurch das textile Flächengebilde Nadelfilz entsteht.

Der eingesetzte Partikelfilter 22 ist dabei gering bis gar nicht hygroskopisch und weist eine offenporige Struktur auf. Neben der offenporigen Struktur, wodurch der Partikelfilter 22 zumindest geringfügig flexibel wird und eine große wirksame Oberfläche zur Aufnahme der Partikel hat, ist der Partikelfilter 22 auch zumindest teilweise komprimierbar, sodass er sich optimal an die Strukturen der Blitzschutzleitung 12 und des Blitzschutzteils 14 anpassen kann.

Darüber hinaus ist der Partikelfilter 22 hitzebeständig und/oder nicht brennbar, sodass sich der Partikelfilter 22 bei einem Blitzeinschlag nicht entzündet und das Blitzschutzsystem 10 beschädigt.

Nach einem Blitzeinschlag ist der der Partikelfilter 22 weiterhin funktionsfähig und kann deshalb auch nach einem Blitzeinschlag zwischen dem Blitzschutzteil 14 und der Blitzschutzleitung 12 verbleiben. Der Partikelfilter 22 ist so ausgelegt, dass er mindestens drei Blitzeinschläge mit einer jeweiligen Stromstärke von 150 kA standhält, ohne beschädigt und ausgetauscht werden zu müssen.

Weist der Nadelfilz metallische Fasern auf, ist der Partikelfilter 22 leitfähig, wobei die Leitfähigkeit des Partikelfilters 22 von dem Anteil der metallischen Fasern und dem Metall selbst abhängt. Der Partikelfilter 22 ist leitfähiger als eine Isolierung, die die Blitzschutzleitung 12 umhüllt, aber weniger leitfähig als die Blitzschutzleitung 12 und/oder das Blitzschutzteil 14 selber, sodass der Partikelfilter 22 gegebenenfalls als eine zusätzliche Isolierung im Kontaktbereich 20 des Blitzschutzsystems 10 eingesetzt werden kann.

Der in den folgenden Figuren 4 bis 12 dargestellte Partikelfilter 22 weist dieselben technischen, physikalischen und chemischen Eigenschaften auf, wie der Partikelfilter 22 der ersten Ausführungsform. Lediglich die Anzahl, Form und Ausgestaltung der Partikelfilter 22 unterscheidet sich von der des Partikelfilters 22 aus Figur 1. Im Folgenden wird daher nur auf die wesentlichen Unterschiede zwischen dem in den Figuren 1-3 dargestellten Partikelfilter 22 und den weiteren Partikelfiltern 22 eingegangen.

Figur 4 zeigt eine zweite Ausführungsform des erfindungsgemäßen Blitzschutzsystems 10, ebenfalls mit einer zwei Blitzschutzleitungen 12, 16, die als erste Fangleitung und zweite Fangleitung ausgebildet sind.

Beide Blitzschutzleitungen 12, 16 sind als flache Fangleitungen oder Platten ausgebildet, die in einem Kontaktbereich 20 durch eine von außen angelegte Kraft wenigstens einen Kontaktpunkt 18 ausbilden, insbesondere eine Kontaktfläche.

Im Kontaktbereich 20 der beiden flachen Blitzschutzleitungen 12, 16, etwas beabstandet vom Kontaktpunkt 18 sind insgesamt zwei Partikelfilter 22 zwischen den Blitzschutzleitungen 12, 16 angebracht, sodass die (erste) Blitzschutzleitung 12 durch die Partikelfilter 22 optimal nach außen hin abgeschirmt werden.

Die Partikelfilter 22 sind so angeordnet, dass sich eine kleine Kammer 28 zwischen den beiden Blitzschutzleitungen 12, 16 und dem Partikelfilter 22 im Kontaktbereich 20 bildet. Die entsprechende Kammer 28 ist also auch vom Kontaktpunkt 18 begrenzt.

Die bei einem Blitzeinschlag gebildeten Partikel fliegen von den beiden Blitzschutzleitungen 12, 16 weg, durch die jeweilige Kammer 28, und werden anschließend vom entsprechenden Partikelfilter 22 aufgenommen, sodass sich die Partikel weder in dem Kontaktbereich 20 noch außerhalb des Kontaktbereichs 20 oder der Umgebung ablagern können.

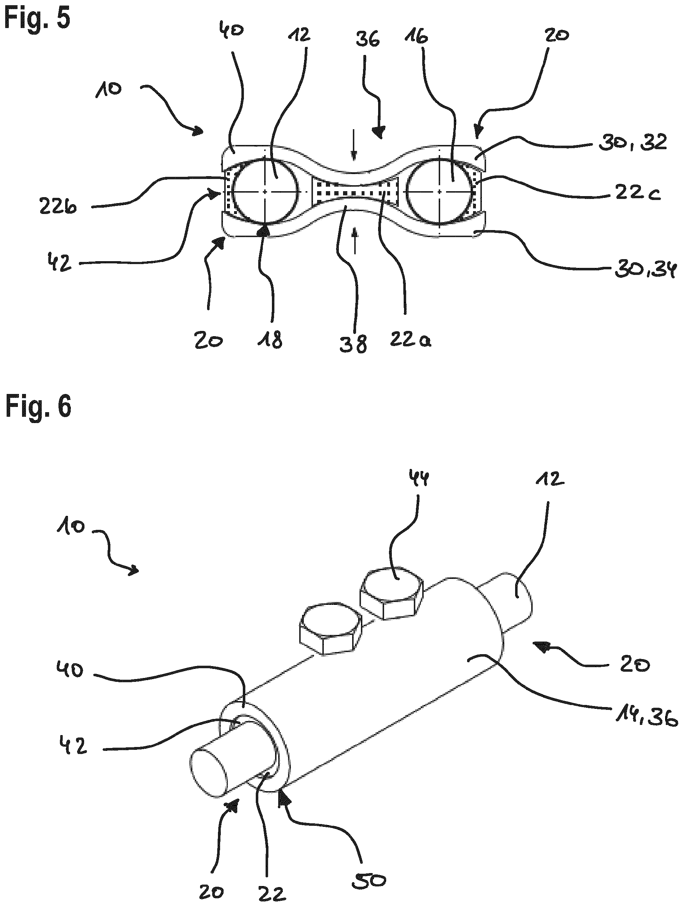

Figur 5 zeigt eine dritte mögliche Ausführungsform des erfindungsgemäßen Blitzschutzsystems 10 mit zwei parallel zueinander angeordneten Blitzschutzleitungen 12, 16 als Fangleitungen, die zwischen einem zweigeteilten Blitzschutzleitungshalter 30 mit einem Oberteil 32 und einem Unterteil 34 angeordnet sind. Der Blitzschutzleitungshalter ist vorliegend also als Fangleitungshalter ausgebildet.

Der Blitzschutzleitungshalter 30 stellt dabei ein Anschlusselement 36 dar, mit dem die beiden Blitzschutzleitungen 12, 16 parallel zueinander geführt und an einem zu schützenden Objekt, beispielsweise einem Gebäude, angebracht werden können.

Das Oberteil 32 und das Unterteil 34 des Blitzschutzleitungshalters 30 können mit einem nicht dargestellten Befestigungselement wie einer Schraube in einem Mittelabschnitt 38 zusammengezogen, sodass sie die beiden Blitzschutzleitungen 12, 16 zwischen sich fixieren und die Blitzschutzleitungen 12, 16 zumindest teilweise umschließen und kontaktieren. Dabei entstehen insgesamt vier Kontaktpunkte 18 zwischen den Blitzschutzleitungen 12, 16 und dem Blitzschutzleitungshalter 30, jeweils zwei Kontaktpunkte 18 pro Blitzschutzleitung 12, 16, die in den Kontaktbereichen 20 liegen. Bei den Kontaktpunkten 18 kann es sich um Kontaktflächen handeln.

Die Blitzschutzleitungen 12, 16 sind in den Kontaktbereichen 20 zur Umgebung hin durch insgesamt drei Partikelfilter 22a, 22b, 22c abgeschirmt. Ein erster Partikelfilter 22a befindet sich im Mittelabschnitt 38 zwischen den beiden Blitzschutzleitungen 12, 16, und wird durch von dem Oberteil 32 und dem Unterteil 34 komprimiert und so zwischen den Blitzschutzleitungen 12, 16 im Inneren des Blitzschutzleitungshalters 30 fixiert.

Die beiden anderen Partikelfilter 22b, 22c sind auf den, vom Partikelfilter 22a abgewandten Seiten der Blitzschutzleitungen 12, 16 angeordnet, also den Außenseiten. Die Partikelfilter 22b, 22c sind dabei ebenfalls zwischen dem Oberteil 32 und dem Unterteil 34 des Blitzschutzleitungshalters 30 angeordnet und liegen mit einer Seite an den jeweiligen Blitzschutzleitungen 12, 16 an. Somit sind die Partikelfilter 22b und 22c zwischen den Blitzschutzleitungen 12, 16 und dem Blitzschutzteil 14 angeordnet.

Die beiden Partikelfilter 22b und 22c schirmen die Blitzschutzleitungen 12, 16 zur Umgebung hin ab, also nach außen hin, während der Partikelfilter 22a im Mittelbereich 38 die beiden Blitzschutzleitungen 12, 16 voneinander abschirmt. Somit gelangen weder Partikel aus dem Blitzschutzleitungshalter 30 nach außen, noch können sie sich an den Blitzschutzleitungen 12, 16 oder dem Blitzschutzleitungshalter 30 ablagern.

Der Blitzschutzleitungshalter 30 weist zwei gegenüberliegende außenseitige Endabschnitte 40 an den jeweiligen Enden des Blitzschutzleitungshalters 30 auf, wobei sich das Oberteil 32 und das Unterteil 34 in den Endabschnitten 40 nicht kontaktieren und eine Öffnung 42 ausbilden.

Die Öffnung 42 weist einen sich in axialer Richtung verringernden Durchmesser auf, sodass der Abstand zwischen dem Oberteil 32 und dem Unterteil 34 in einem Endabschnitt 40 nach außen hin kontinuierlich abnimmt. Dadurch werden die Partikelfilter 22b und 22c, die sich im Bereich der Öffnung 42 des Endabschnitts 40 befinden, durch die aufeinander zulaufenden Ober- und Unterteile 32, 34 komprimiert und gehalten, sodass die Partikelfilter 22b, 22c nicht aus dem Blitzschutzleitungshalter 30 herausrutschen können. Gleichzeitig ist damit eine optimale Abdichtung zur Umgebung hin sichergestellt.

In den Figuren 6 bis 8 ist eine vierte Ausführungsform des erfindungsgemäßen Blitzschutzsystems 10 dargestellt.

Das Blitzschutzsystem 10 weist eine Blitzschutzleitung 12 auf, die durch ein zylinderförmiges Anschlusselement 36 verläuft und die mit zwei Schrauben 44 darin fixiert ist, wobei die Schrauben 44 die Blitzschutzleitung 12 direkt kontaktieren.

Das Anschlusselement 36, das als Stoßverbinder ausgebildet ist, weist zwei gegenüberliegende Öffnungen 42 auf, durch die die Blitzschutzleitung 12 verläuft. Die Blitzschutzleitung 12 erstreckt sich also über die gesamte Länge des Anschlusselements 36.

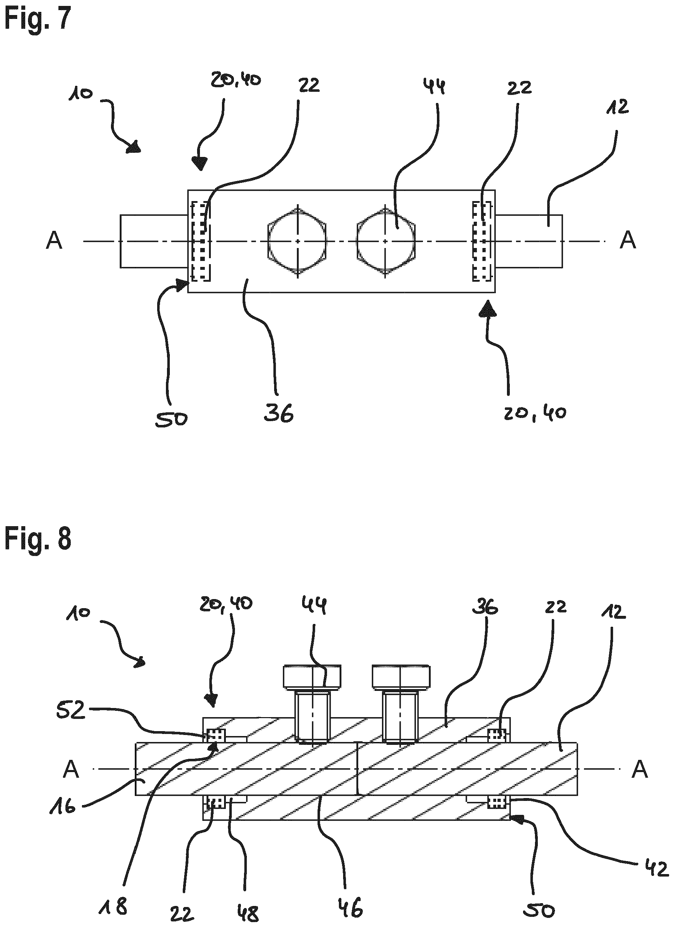

Das Anschlusselement 36 weist im Inneren einen Hohlraum mit einer Innenwand 46 auf, die die Blitzschutzleitung 12 (umfangsmäßig vollständig) kontaktiert und vollständig umschließt. Im Hohlraum des Anschlusselements 36 sind, wie in Figur 8 erkennbar ist, im Bereich der Öffnungen 42 zwei identische Partikelfilter 22 eingebracht.

Die beiden Partikelfilter 22 sind als Ringe ausgebildet, die jeweils auf zwei gegenüberliegenden Seiten der Blitzschutzleitung 12 angeordnet oder gesteckt sind.

Im Bereich der Öffnungen 42, also im Kontaktbereich 20, weist die Innenwand 46 des Anschlusselements 36 eine (nutförmige) Aufnahme 48 auf, in der der Partikelfilter 22 aufgenommen ist. Die Aufnahme 48 ist als Aussparung bzw. Vertiefung ausgestaltet, die am seitlich äußeren Rand 50 des Anschlusselements 36 einen Überstand 52 bzw. Kragen aufweist, der verhindert, dass der Partikelfilter 22 aus der Öffnung 42 des Anschlusselements 36 rutschen kann.

Die beiden ringförmigen Partikelfilter 22 sind somit zwischen dem Anschlusselement 36 und der Blitzschutzleitung 12 angeordnet und dichten den Innenraum des Anschlusselements 36 und damit auch den Kontaktbereich 20 mit der Blitzschutzleitung 12 und dem Anschlusselement 36 vollständig zur Umgebung hin ab, sodass sich keine Partikel im Kontaktbereich 20 ablagern können.

Es können auch zwei verschiedene Fangleitungen in dem Stoßverbinder miteinander verbunden werden. Dann schirmt der Partikelfilter 22 den wenigstens einen Kontaktbereich 20 der beiden Blitzschutzleitungen 12, 16 ab.

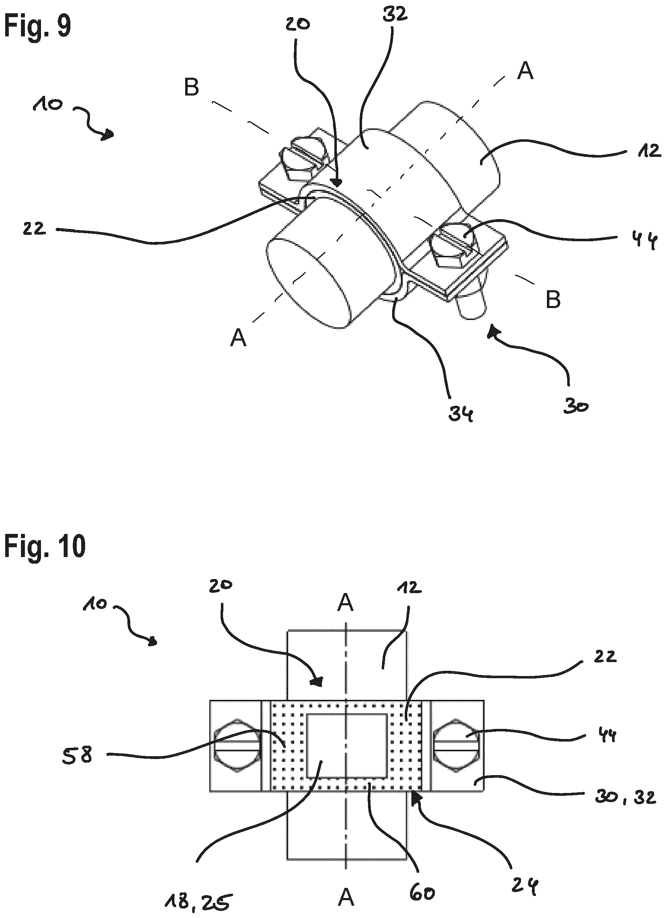

Die Figuren 9 bis 11 zeigen eine fünfte Ausführungsform des erfindungsgemäßen Blitzschutzsystems 10 mit der Blitzschutzleitung 12 und dem Anschlusselement 36, das als zweiteiliger Blitzschutzleitungshalter 30, genau genommen als Schelle ausgebildet ist.

Der Blitzschutzleitungshalter 30 weist, wie in der dritten Ausführungsform auch, ein Oberteil 32 und ein Unterteil 34 auf, die über zwei Schrauben 44 miteinander verbunden sind.

Anders als der Blitzschutzleitungshalter 30 der dritten Ausführungsform kann der Blitzschutzleitungshalter 30 der fünften Ausführungsform nur eine Blitzschutzleitung 12 aufnehmen. Das Oberteil 32 und das Unterteil 34 weisen daher einen halbkreisförmigen Querschnitt auf und umschließen die Blitzschutzleitung 12 jeweils zur Hälfte, sodass das Anschlusselement 36 die Blitzschutzleitung 12 vollständig umschließt und in mehreren Kontaktbereichen 20 kontaktiert.

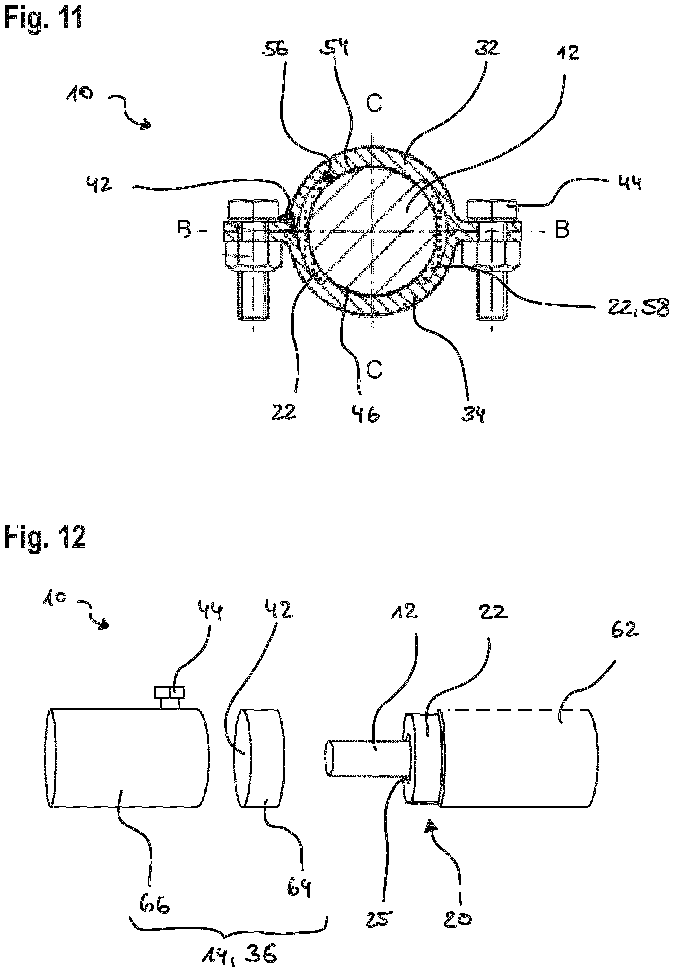

Wie in Figur 11 dargestellt ist, weisen das Oberteil 32 und das Unterteil 34 die Innenwand 46 auf, über die sie die Blitzschutzleitung 12 kontaktieren. Genau genommen weisen die Innenwände 46 des Oberteils 32 und des Unterteils 34 jeweils einen Vorsprung 54 auf, der jeweils ausgehend von der zugeordneten Innenwand 46 in Richtung der Blitzschutzleitung 12 ragt und den Kontaktpunkt 18 zwischen Blitzschutzleitung 12 und Anschlusselement 36 ausbildet. In diesem Bereich befindet sich der Kontaktbereich 20. Die jeweiligen Kontaktpunkte 18 können als Kontaktflächen ausgebildet sein.

Das Blitzschutzsystem 10 weist in den Kontaktbereichen 20 einen Partikelfilter 22 zwischen der Blitzschutzleitung 12 und dem Blitzschutzteil 14 auf. Der Partikelfilter 22 schmiegt sich vollständig an die Blitzschutzleitung 12 an, sodass dieser im Querschnitt zumindest teilringförmig auf der Blitzschutzleitung 12 angeordnet ist.

Der Partikelfilter 22 hat in dieser Ausführungsform, wie aus Figur 10 hervorgeht, eine rechteckige Außenkontur 24 und ein innenliegendes rechteckiges Loch 25. Der Partikelfilter 22 ist also aus zwei Abschnitten 58 und zwei, die Abschnitte 58 verbindenden Stegen 60 gebildet, wobei die Abschnitte 58 im zusammengebauten Zustand und im Querschnitt betrachtet teilkreisförmig auf der Blitzschutzleitung 12 liegen, wie Figur 11 zeigt.

Die Abschnitte 58 dichten das Anschlusselement 36 in Richtung eines Spalts (einer Öffnung) zwischen dem Oberteil 32 und dem Unterteil 34 im Endabschnitt 40 ab, der durch die Schrauben soweit wie möglich geschlossen wird. Die Stege 60 dichten den Kontaktbereich 20 in axialer Richtung ab, sodass keine Partikel aus dem Kontaktbereich 20 austreten können und die Blitzschutzleitung 12 zur Umgebung hin abgeschirmt ist.

Die Abschnitte 58 und die Stege 60 umschließen das Loch 25, in dem, im zusammengebauten Zustand, der Vorsprung 54 mit vier Anlageflächen 56 aufgenommen ist. Dabei umschließt das Loch 25 des Partikelfilters 22 den Vorsprung 54 des Fangleitungshalters 30 und damit auch den Kontaktpunkt 18 und den Kontaktbereich 20 vollständig.

Figur 12 zeigt eine sechste Ausführungsform des Blitzschutzsystems 10 mit einer Blitzschutzleitung 12, die eine, sie ummantelnde Isolierung 62 aufweist, und einem Blitzschutzteil 14.

Das Blitzschutzteil 14 ist ein Anschlusselement 36 mit einer demontierbaren Isolierhülse 64 und einem Anschlusskopf 66. Die Isolierhülse 64 befindet sich zwischen der Blitzschutzleitung 12 und dem Anschlusskopf 66 und ist aus Kunststoff gebildet, während der Anschlusskopf 68 aus Metall gebildet ist.

Die Blitzschutzleitung 12 kann durch die Öffnung 42 in den Anschlusskopf 66 geschoben und dort über eine Schraube 44 fixiert werden. Der eingesteckte Abschnitt der Blitzschutzleitung 12 wird dabei vollständig von dem Anschlusskopf 66 umschlossen, wobei der Anschlusskopf 66 durch seine Innenwand 46 die Blitzschutzleitung 12 im Kontaktbereich 20 kontaktiert.

Auf der Blitzschutzleitung 12 befindet sich der ringförmige Partikelfilter 22, der sich vollständig um die Blitzschutzleitung 12 herumerstreckt und diese umschließt. Der Partikelfilter 22 ist in einem zusammengebauten Zustand zwischen der Blitzschutzleitung 12 und dem Anschlusselement 36 angeordnet und befindet sich im Bereich der Öffnung 42 des Anschlusselement 36, genauer gesagt im Bereich der Öffnung 42 der Isolierhülse 64.

Das Loch 25 im Partikelfilter 22 hat im Wesentlichen denselben Durchmesser wie die Blitzschutzleitung 12, sodass der Partikelfilter 22 annähernd bündig an der Blitzschutzleitung 12 anliegt. Mit der Außenkontur 24 liegt der Partikelfilter 22 bündig an der Innenseite des Anschlusselements 36 an, sodass der Partikelfilter 22 die Öffnung 42 des Anschlusselements 36 und somit auch den darin liegenden Kontaktbereich 20 und die Blitzschutzleitung 12 vollständig zur Umgebung hin abschirmt.

Mit dem Partikelfilter 22 wird somit verhindert, dass sich Partikel an der Blitzschutzleitung 12 und/oder dem Blitzschutzteil 14 anlagern und somit auch, dass Partikel in die Umgebung der Blitzschutzleitung 12 gelangen, die die Isolierfestigkeit negativ beeinträchtigen.

Grundsätzlich ist vorstellbar, dass der Partikelfilter 22 auch zwischen zwei sich kontaktierenden Blitzschutzteilen 14, die beide als Anschlusselemente ausgebildet sind, angeordnet ist und deren Kontaktbereich 20 zur Umgebung hin abschirmt.

## Patentansprüche

1. Blitzschutzsystem (10) mit einer Blitzschutzleitung (12), an der ein Kontaktbereich (20) vorgesehen ist, in dem die Blitzschutzleitung (12) mit einem Blitzschutzteil (14) elektrisch leitend verbunden ist, wobei im Kontaktbereich (20) mindestens ein Partikelfilter (22) angeordnet ist, der sich wenigstens teilweise um die Blitzschutzleitung (12) und/oder dem Blitzschutzteil (14) herum erstreckt und diese damit zur Umgebung hin abschirmt, wobei der Partikelfilter (12) aus einem Nadelfilz gebildet ist.

2. Blitzschutzsystem (10) nach Anspruch 1, **dadurch gekennzeichnet, dass** das Blitzschutzteil (14) eine weitere Blitzschutzleitung (16) oder ein Anschlusselement (36) ist.

3. Blitzschutzsystem (10) nach einem der Ansprüche 1 und 2, **dadurch gekennzeichnet, dass** das Blitzschutzteil (14) ein Anschlusskopf (66), ein Befestigungsring, ein Befestigungsbolzen, ein Verbindungselement, ein Fangleitungshalter (30), eine Anschlussklemme oder ein Stoßverbinder ist.

4. Blitzschutzsystem (10) nach einem der vorhergehenden Ansprüche, **dadurch gekennzeichnet, dass** der Partikelfilter (22) zwischen der Blitzschutzleitung (12) und dem Blitzschutzteil (14) angeordnet ist.

5. Blitzschutzsystem (10) nach einem der vorhergehenden Ansprüche, **dadurch gekennzeichnet, dass** der Partikelfilter (22) zwischen dem Blitzschutzteil (14) und der Blitzschutzleitung (12) im Bereich einer Öffnung (42) des Blitzschutzteils (14) angeordnet ist.

6. Blitzschutzsystem (10) nach einem der vorhergehenden Ansprüche, **dadurch gekennzeichnet, dass** der Partikelfilter (22) zumindest teilringförmig auf der Blitzschutzleitung (12) angeordnet ist und/oder dass der Partikelfilter (22) als ein Ring ausgebildet ist, der auf der Blitzschutzleitung (12) angeordnet ist.

7. Blitzschutzsystem (10) nach einem der vorhergehenden Ansprüche, **dadurch gekennzeichnet, dass** das Blitzschutzteil (14) die Blitzschutzleitung (12) zumindest teilweise umschließt und kontaktiert.

8. Blitzschutzsystem (10) nach einem der vorhergehenden Ansprüche, **dadurch gekennzeichnet, dass** das Blitzschutzteil (14) an einer Innenwand (46) zumindest einen Vorsprung (54) hat, an dem ein Kontaktpunkt (18) zur Blitzschutzleitung (12) ausgebildet ist, insbesondere wobei der zumindest eine Vorsprung (54) eine Anlagefläche (56) für den Partikelfilter (22) ausbildet.

9. Blitzschutzsystem (10) nach einem der Ansprüche 1 bis 7, **dadurch gekennzeichnet, dass** das Blitzschutzteil (14) an einer Innenwand (46) zumindest eine Aufnahme (48) hat, in der der Partikelfilter (22) angeordnet ist.

10. Blitzschutzsystem (10) nach einem der vorhergehenden Ansprüche, **dadurch gekennzeichnet, dass** der Partikelfilter (22) den Kontaktbereich (20) zwischen der Blitzschutzleitung (12) und dem Blitzschutzteil (14) vollständig umschließt.

11. Blitzschutzsystem (10) nach einem der vorhergehenden Ansprüche, **dadurch gekennzeichnet, dass** der Partikelfilter (22) gering hygroskopisch ist, insbesondere ist der Partikelfilter (22) nicht hygroskopisch, und/oder dass der Partikelfilter (22) hitzebeständig und/oder nicht brennbar ist, und/oder dass der Partikelfilter (12) offenporig und/oder zumindest teilweise komprimierbar ist, und/oder dass der Partikelfilter (12) auch nach einem Blitzschlagereignis funktionsfähig ist, und/oder dass der Partikelfilter (22) leitfähig ist, insbesondere wobei der Partikelfilter (22) leitfähiger als eine, die Blitzschutzleitung (12) umhüllende Isolierung (62) und weniger leitfähig als die Blitzschutzleitung (12) und/oder das Blitzschutzteil (14) ist.

12. Blitzschutzsystem (10) nach einem der vorhergehenden Ansprüche, **dadurch gekennzeichnet, dass** der technische Nadelfilz aus Natur- und/oder Kunststofffasern und/oder metallischen Fasern besteht.

13. Blitzschutzsystem (10) nach einem der vorhergehenden Ansprüche, **dadurch gekennzeichnet, dass** der Partikelfilter (12) als dreidimensionaler Filter wirkt und Partikel abhält, die ausgewählt sind aus der Gruppe bestehend aus:
Schmauch, Ruß, Spritzer, Tropfen und weitere Partikel, die bei einem Blitzschlagereignis zwischen der Blitzschutzleitung (12) und dem Blitzschutzteil (14) entstehen, sowie Kombinationen davon.

14. Partikelfilter (22) für ein Blitzschutzsystem (10) nach einem der vorhergehenden Ansprüche, wobei der Partikelfilter (22) aus einem Nadelfilz gebildet ist.

15. Verwendung eines Nadelfilzes als Partikelfilter (22) für ein Blitzschutzsystem (10) nach einem der vorhergehenden Ansprüche.
